# EUROPEAN PATENT APPLICATION

(11) **EP 4 822 504 A1**
(43) Date of publication of application: **14.10.2026**
(21) Application number: 25802932.1
(22) Date of filing: 13.05.2025
(51) Int. Cl.: G06F 3/04815

(54) **THREE-DIMENSIONAL OPERATION POINTER CONFIGURATION METHOD, HEAD-MOUNTED DISPLAY DEVICE, AND READABLE MEDIUM**

(30) Priority: 13.05.2024 CN 202410586777
(71) Applicant: Hangzhou Lingban Technology Co., Ltd., Hangzhou, Zhejiang 310000 (CN)
(72) Inventor: CHEN, Lin, Hangzhou, Zhejiang 310000 (CN); ZHANG, Mo, Hangzhou, Zhejiang 310000 (CN); ZHU, Mingming, Hangzhou, Zhejiang 310000 (CN)
(74) Representative: Huang, Liwei
(86) International application number: PCT/CN2025/094565
(87) International publication number: WO 2025/237285

(57) **Abstract**

Embodiments of the present disclosure disclose a three-dimensional operation pointer configuration method, a head-mounted display device, and a readable medium. A specific implementation of the method includes: obtaining information of each operation of an operation auxiliary device in a current operation process, where a current operation corresponding to the current operation process satisfies a preset non-touch condition; updating maximum operation information based on the obtained information of each operation in the current operation process; in response to determining that the maximum operation information stops being updated, determining, based on the maximum operation information and information of the current operation, whether the current operation satisfies a preset condition for configuring the three-dimensional operation pointer; and in response to determining that the preset condition for configuring the three-dimensional operation pointer is satisfied, configuring a three-dimensional operation pointer. This implementation simplifies user operations for configuring the three-dimensional operation pointer, and there is no need to move the line of sight away from a head-mounted display device, thereby reducing a mistouch rate, avoiding mutual exclusion of interaction caused by a touch operation, and making it convenient for a user to remember an operation manner of configuring the three-dimensional operation pointer.

## Description

### CROSS-REFERENCE TO RELATED APPLICATIONS

The present application claims priority to Chinese Patent Application No. 202410586777.4, filed with the China National Intellectual Property Administration on May 13, 2024, which is incorporated herein by reference in its entirety.

### TECHNICAL FIELD

Embodiments of the present disclosure relate to the field of computer technologies, and specifically, to a three-dimensional operation pointer configuration method, a head-mounted display device, and a readable medium.

### BACKGROUND

A head-mounted display device can be used to display three-dimensional space to a wearing user, and the wearing user can perform an interaction operation through a touch device. During the interaction operation, an interaction position can be indicated by an operation ray based on a user requirement. Currently, to enable operation ray-based indication, a commonly used manner is that the user performs a touch operation in a particular area on the touch device.

However, the inventor has found that when operation ray-based indication is enabled in the foregoing manner, the following technical problems often exist: When the user wears the head-mounted display device and performs the touch operation, the user needs to shift the line of sight to the particular area on the touch device, resulting in cumbersome interaction operations, and poor immersion of using the head-mounted display device by the user. In addition, a mistouch rate is high when the line of sight disengages from the head-mounted display device. When the particular area on the touch device corresponds to a touch operation with another function, touch operations corresponding to different functions may cause mutual exclusion. In addition, touch operations acting on the same area are similar, which easily makes the user get confused.

The foregoing information disclosed in this background section is only for enhancing understanding of the background of the concept of the present disclosure, and therefore, the information may contain information that does not form the prior art known to a person of ordinary skill in the art.

### SUMMARY

The summary section of the present disclosure is intended to introduce concepts in a brief form, and the concepts are described in detail in the subsequent description of embodiments section. The summary section of the present disclosure is neither intended to identify key features or necessary features of the claimed technical solutions, nor intended to limit the scope of the claimed technical solutions.

Some embodiments of the present disclosure propose a three-dimensional operation pointer configuration method, a head-mounted display device, a computer-readable medium, and a computer program product, to resolve one or more of the technical problems mentioned in the background section above.

According to a first aspect, some embodiments of the present disclosure provide a three-dimensional operation pointer configuration method. The method includes: obtaining information of each operation of an operation auxiliary device in a current operation process, where the operation auxiliary device is in communication connection to a head-mounted display device, and a current operation corresponding to the current operation process satisfies a preset non-touch condition; updating maximum operation information based on the obtained information of each operation in the current operation process; in response to determining that the maximum operation information stops being updated, determining, based on updated maximum operation information and information of the current operation of the operation auxiliary device, whether the current operation satisfies a preset condition for configuring the three-dimensional operation pointer; and in response to determining that the current operation satisfies the preset condition for configuring the three-dimensional operation pointer, configuring a three-dimensional operation pointer based on a pointer status of the three-dimensional operation pointer used for display on the head-mounted display device.

Optionally, the obtained information of each operation includes operation angle information, the maximum operation information includes maximum operation angle information, and the determining, based on updated maximum operation information and information of the current operation of the operation auxiliary device, whether the current operation satisfies a preset condition for configuring the three-dimensional operation pointer includes: determining, based on operation angle information included in the information of the current operation and maximum operation angle information included in the updated maximum operation information, whether the current operation satisfies the preset condition for configuring the three-dimensional operation pointer.

Optionally, the obtained information of each operation includes operation displacement information, the maximum operation information includes maximum operation displacement information, and the determining, based on updated maximum operation information and information of the current operation of the operation auxiliary device, whether the current operation satisfies a preset condition for configuring the three-dimensional operation pointer includes: determining, based on operation displacement information included in the information of the current operation and maximum operation displacement information included in the updated maximum operation information, whether the current operation satisfies the preset condition for configuring the three-dimensional operation pointer.

Optionally, the obtained information of each operation includes operation angle information and operation displacement information, the maximum operation information includes maximum operation angle information and maximum operation displacement information, and the determining, based on updated maximum operation information and information of the current operation of the operation auxiliary device, whether the current operation satisfies a preset condition for configuring the three-dimensional operation pointer includes: determining, based on operation angle information and operation displacement information included in the information of the current operation and maximum operation angle information and maximum operation displacement information included in the updated maximum operation information, whether the current operation satisfies the preset condition for configuring the three-dimensional operation pointer.

Optionally, the operation angle information includes an operation angle and an operation angular velocity, the maximum operation angle information includes a maximum operation angle and a maximum operation angular velocity, and the determining, based on operation angle information included in the information of the current operation and maximum operation angle information included in the updated maximum operation information, whether the current operation satisfies the preset condition for configuring the three-dimensional operation pointer includes: in response to determining that an operation angular velocity included in the information of the current operation satisfies a preset angular velocity threshold condition, determining whether a maximum operation angular velocity included in the updated maximum operation angle information satisfies a preset maximum angular velocity threshold condition; in response to determining that the maximum operation angular velocity included in the updated maximum operation angle information satisfies the preset maximum angular velocity threshold condition, determining whether a maximum operation angle included in the updated maximum operation angle information and an operation angle included in the information of the current operation satisfy a preset angle difference condition; and in response to determining that the maximum operation angle included in the updated maximum operation angle information and the operation angle included in the information of the current operation satisfy the preset angle difference condition, determining whether the current operation satisfies the preset condition for configuring the three-dimensional operation pointer.

Optionally, when the operation corresponding to the current operation process is a pitch shake operation, the operation angle included in the operation angle information is a pitch angle, the operation angular velocity included in the operation angle information is a pitch angular velocity, the maximum operation angle included in the maximum operation angle information is a maximum pitch angle, and the maximum operation angular velocity included in the maximum operation angle information is a maximum pitch angular velocity.

Optionally, when the operation corresponding to the current operation process is a lateral shake operation, the operation angle included in the operation angle information is a yaw angle, the operation angular velocity included in the operation angle information is a yaw angular velocity, the maximum operation angle included in the maximum operation angle information is a maximum yaw angle, and the maximum operation angular velocity included in the maximum operation angle information is a maximum yaw angular velocity.

Optionally, when the operation corresponding to the current operation process is a roll operation, the operation angle included in the operation angle information is a roll angle, the operation angular velocity included in the operation angle information is a roll angular velocity, the maximum operation angle included in the maximum operation angle information is a maximum roll angle, and the maximum operation angular velocity included in the maximum operation angle information is a maximum roll angular velocity.

Optionally, the configuring a three-dimensional operation pointer based on a pointer status of the three-dimensional operation pointer used for display on the head-mounted display device includes: resetting the three-dimensional operation pointer in response to determining that the pointer status indicates that the three-dimensional operation pointer is activated.

Optionally, the configuring a three-dimensional operation pointer based on a pointer status of the three-dimensional operation pointer used for display on the head-mounted display device includes: activating the three-dimensional operation pointer in response to determining that the pointer status indicates that the three-dimensional operation pointer is not activated.

Optionally, the activating the three-dimensional operation pointer includes: determining a current direction vector of the operation auxiliary device in a device coordinate system; mapping the direction vector to three-dimensional display space of the head-mounted display device to obtain a mapped direction vector; and displaying the three-dimensional operation pointer in the three-dimensional display space based on a direction corresponding to the mapped direction vector, to activate the three-dimensional operation pointer.

Optionally, the resetting the three-dimensional operation pointer includes: determining a current direction vector of the operation auxiliary device in a device coordinate system; mapping the direction vector to three-dimensional display space of the head-mounted display device to obtain a mapped direction vector; and adjusting a pointing direction of the displayed three-dimensional operation pointer to a direction corresponding to the mapped direction vector in the three-dimensional display space, to reset the three-dimensional operation pointer.

Optionally, the obtaining information of each operation of an operation auxiliary device in a current operation process includes: obtaining information of each operation of the operation auxiliary device in the current operation process in response to detecting an operation of enabling collection of operation information.

Optionally, the configuring a three-dimensional operation pointer includes: determining whether there is a touch operation corresponding to the operation auxiliary device; and configuring the three-dimensional operation pointer in response to determining that there is no touch operation corresponding to the operation auxiliary device.

Optionally, the determining, based on updated maximum operation information and information of the current operation of the operation auxiliary device, whether the current operation satisfies a preset condition for configuring the three-dimensional operation pointer includes: in response to determining that the maximum operation information stops being updated, determining whether the current operation satisfies the preset condition for configuring the three-dimensional operation pointer within a time period corresponding to preset duration; and resetting the maximum operation information in response to determining that the current operation does not satisfy the preset condition for configuring the three-dimensional operation pointer within the time period corresponding to the preset duration.

According to a second aspect, some embodiments of the present disclosure provide a head-mounted display device, including: one or more processors; a storage apparatus, storing one or more programs; at least one display screen and an optical element, used for imaging in front of eyes of a user; and an operation auxiliary device, the operation auxiliary device including an operation information collection apparatus, and the operation information collection apparatus being configured to obtain operation information of the operation auxiliary device in an operation process. When executed by the one or more processors, the one or more programs causes the one or more processors to implement the method described in any implementation of the first aspect.

According to a third aspect, some embodiments of the present disclosure provide a computer-readable medium, storing a computer program. When executed by a processor, the program implements the method described in any implementation of the first aspect.

According to a fourth aspect, some embodiments of the present disclosure provide a computer program product, including a computer program. When executed by a processor, the computer program implements the method described in any implementation of the first aspect.

The foregoing embodiments of the present disclosure have the following beneficial effects: The three-dimensional operation pointer configuration method according to some embodiments of the present disclosure simplifies user operations for configuring the three-dimensional operation pointer, and improves immersion of using the head-mounted display device by the user, and there is no need to move the line of sight away from the head-mounted display device, thereby reducing a mistouch rate, avoiding mutual exclusion of interaction caused by a touch operation, and making it convenient for the user to remember an operation manner of configuring the three-dimensional operation pointer. Specifically, reasons for cumbersome interaction operations, a high mistouch rate, mutual exclusion of interaction caused by a touch operation, and user confusion are as follows: When the user wears the head-mounted display device and performs the touch operation, the user needs to shift the line of sight to a particular area on a touch device, resulting in cumbersome interaction operations, and poor immersion of using the head-mounted display device by the user. In addition, the mistouch rate is high when the line of sight disengages from the head-mounted display device. When the particular area on the touch device corresponds to a touch operation with another function, touch operations corresponding to different functions may cause mutual exclusion. In addition, touch operations acting on the same area are similar, which easily makes the user get confused. Based on this, in the three-dimensional operation pointer configuration method according to some embodiments of the present disclosure, first, information of each operation of an operation auxiliary device in a current operation process is obtained, where the operation auxiliary device is in communication connection to a head-mounted display device, and a current operation corresponding to the current operation process satisfies a preset non-touch condition. Thus, information of each operation of the operation auxiliary device in a non-touch operation process of a user can be collected when the user holds the operation auxiliary device. Then, maximum operation information is updated based on the obtained information of each operation in the current operation process. Thus, the maximum operation information representing a maximum operation amount can be continuously updated based on the operation information in the operation process. Subsequently, in response to determining that the maximum operation information stops being updated, whether the current operation satisfies a preset condition for configuring the three-dimensional operation pointer is determined based on updated maximum operation information and information of the current operation of the operation auxiliary device. Thus, when the maximum operation information representing the maximum operation amount stops being updated, whether the current operation triggers configuration logic of a three-dimensional operation pointer can be determined based on the information of the current operation and the maximum operation information. Finally, in response to determining that the current operation satisfies the preset condition for configuring the three-dimensional operation pointer, a three-dimensional operation pointer is configured based on a pointer status of the three-dimensional operation pointer used for display on the head-mounted display device. Thus, after the current operation triggers the configuration logic of the three-dimensional operation pointer, the configuration logic of the three-dimensional operation pointer can be executed. Because configuration of the three-dimensional operation pointer is triggered by a non-touch operation of the user, the user does not need to perform a touch operation in any particular area on the operation auxiliary device, and therefore does not need to move the line of sight away from the head-mounted display device, thereby simplifying user operations for configuring the three-dimensional operation pointer, improving immersion of using the head-mounted display device by the user, and reducing a mistouch rate. In addition, mutual exclusion of interaction caused by a touch operation can be avoided, and the user does not need to remember a touch operation manner in the particular area, thereby making it convenient for the user to remember an operation manner of configuring the three-dimensional operation pointer.

### BRIEF DESCRIPTION OF DRAWINGS

The above-mentioned and other features, advantages, and aspects of embodiments of the present disclosure become more apparent with reference to the accompanying drawings and the following description of embodiments. Throughout the accompanying drawings, the same or similar reference numerals denote the same or similar elements. It should be understood that the accompanying drawings are schematic, and components and elements are not necessarily drawn to scale.
FIG. 1 is a flowchart of some embodiments of a three-dimensional operation pointer configuration method according to the present disclosure;
FIG. 2 is a flowchart of some other embodiments of a three-dimensional operation pointer configuration method according to the present disclosure; and
FIG. 3 is a schematic structural diagram of a head-mounted display device applicable to implement some embodiments of the present disclosure.

### DETAILED DESCRIPTION OF THE EMBODIMENTS

The embodiments of the present disclosure are described in more detail below with reference to the accompanying drawings. Although some embodiments of the present disclosure are shown in the accompanying drawings, it should be understood that the present disclosure can be implemented in various forms and should not be construed as being limited to the embodiments set forth herein. On the contrary, these embodiments are provided for a more thorough and complete understanding of the present disclosure. It should be understood that the accompanying drawings and embodiments of the present disclosure are for illustrative purposes only and are not intended to limit the protection scope of the present disclosure.

In addition, it should also be noted that, for ease of description, only parts related to the relevant disclosure are shown in the accompanying drawings. Embodiments of the present disclosure and features in the embodiments may be mutually combined in a case that no conflict occurs.

It should be noted that concepts such as "first" and "second" mentioned in the present disclosure are only used to distinguish between different apparatuses, modules, or units, and are not used to limit the sequence of functions performed by these apparatuses, modules, or units or interdependence.

It should be noted that the modifications of "a" and "a plurality of" mentioned in the present disclosure are schematic rather than limiting, and a person skilled in the art should understand that unless the context clearly indicates otherwise, they should be understood as "one or more".

The names of messages or information exchanged between a plurality of apparatuses in the implementations of the present disclosure are used for illustrative purposes only, and are not used to limit the scope of these messages or information.

The present disclosure is described in detail below with reference to the accompanying drawings and the embodiments.

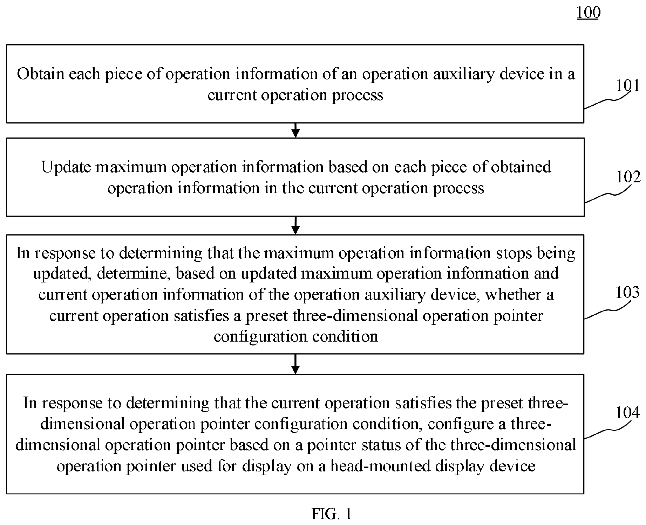

FIG. 1 shows a process 100 of some embodiments of a three-dimensional operation pointer configuration method according to the present disclosure. The three-dimensional operation pointer configuration method includes the following steps.

Step 101: Obtain information of each operation of an operation auxiliary device in a current operation process.

In some embodiments, an execution body (such as a head-mounted display device or the operation auxiliary device) of the three-dimensional operation pointer configuration method may obtain information of each operation of the operation auxiliary device in the current operation process in a wired connection manner or a wireless connection manner. The operation auxiliary device may be configured to receive an interaction operation of a user. For example, the operation auxiliary device may include but is not limited to one of the following: a mobile phone, a tablet computer, and a touchpad. The operation auxiliary device may include an operation information collection apparatus. The operation information collection apparatus may be configured to obtain the operation information of the operation auxiliary device in the operation process. The operation information collection apparatus may include but is not limited to at least one of the following: an inertial measurement unit and an infrared sensor. The inertial measurement unit may be configured to monitor angle-related information. The infrared sensor may be configured to monitor angle-related information and/or displacement-related information. The angle-related information may include an angle and an angular velocity. The displacement-related information may include a displacement distance and a displacement velocity. The head-mounted display device may be a device for a wearing user to view display content. The head-mounted display device may be but is not limited to AR glasses, MR glasses, or VR glasses. A current operation corresponding to the current operation process satisfies a preset non-touch condition. The preset non-touch condition may be that the current operation does not include a touch operation. The preset non-touch condition may alternatively be that the current operation does not include a touch operation acting on a particular touch screen area. The touch operation may be an operation acting on a touchscreen or a touchpad. Specifically, the current operation may be a rotation operation and/or a displacement operation. information of each operation may be collected at a predetermined frequency in the current operation process. The operation information may be monitoring information for at least one operation amount in the operation process. For example, the operation information may include a pitch angle.

It should be noted that the wireless connection manner may include but is not limited to a 3G/4G connection, a Wi-Fi connection, a Bluetooth connection, a WiMAX connection, a Zigbee connection, a UWB (ultra wideband) connection, and another wireless connection manner that is known currently or developed in the future. When the operation auxiliary device (such as a mobile phone) serves as the execution body, the head-mounted display device may serve as an external display device of the operation auxiliary device. Optionally, the execution body may alternatively be a movable host in communication connection to the head-mounted display device, and can provide computing power support for the head-mounted display device, or can provide electric power support for the head-mounted display device.

In some optional implementations of some embodiments, the execution body may obtain information of each operation of the operation auxiliary device in the current operation process in response to detecting an operation of enabling collection of operation information. The collection enabling operation may be an operation used to determine to start collecting operation information. For example, the collection enabling operation may be a click/tap operation acting on a preset button. The preset button may be provided on the operation auxiliary device. Thus, after the user confirms to start collecting operation information, information of each operation of the operation auxiliary device in the current operation process may start to be obtained.

Step 102: Update maximum operation information based on the obtained information of each operation in the current operation process.

In some embodiments, the execution body may update the maximum operation information based on the obtained information of each operation in the current operation process. The maximum operation information may represent information about a maximum operation amount. The maximum operation information may include at least one operation amount. In an initial state, each operation amount included in the maximum operation information may be 0. In practice, the execution body may update the maximum operation information in real time in the current operation process based on the operation information collected in real time.

Step 103: In response to determining that the maximum operation information stops being updated, determine, based on updated maximum operation information and information of the current operation of the operation auxiliary device, whether the current operation satisfies a preset condition for configuring the three-dimensional operation pointer.

In some embodiments, in response to determining that the maximum operation information stops being updated, the execution body may determine, based on the updated maximum operation information and the information of the current operation of the operation auxiliary device, whether the current operation satisfies the preset condition for configuring the three-dimensional operation pointer. In practice, in response to determining that a difference between a maximum pitch angle included in the updated maximum operation information and a pitch angle included in the information of the current operation is greater than a preset angle, the execution body may determine whether the current operation satisfies the preset condition for configuring the three-dimensional operation pointer. For example, the preset angle may be 60°. Herein, a specific setting of the preset angle is not limited.

In some optional implementations of some embodiments, the execution body may determine, according to the following steps based on the updated maximum operation information and the information of the current operation of the operation auxiliary device, whether the current operation satisfies the preset condition for configuring the three-dimensional operation pointer.

First step: In response to determining that the maximum operation information stops being updated, determine whether the current operation satisfies the preset condition for configuring the three-dimensional operation pointer within a time period corresponding to preset duration. The time period corresponding to the preset duration may be a time period that lasts for the preset duration starting from a moment when the maximum operation information stops being updated. Thus, whether a user operation satisfies a trigger condition for three-dimensional operation pointer configuration within the preset duration after the maximum operation information stops being updated can be determined.

Second step: Reset the maximum operation information in response to determining that the current operation does not satisfy the preset condition for configuring the three-dimensional operation pointer within the time period corresponding to the preset duration. In practice, the execution body may set the maximum operation information to maximum operation information in an initial state. Each operation amount included in the maximum operation information in the initial state may be 0. Thus, when it is determined that the user operation does not satisfy the trigger condition for three-dimensional operation pointer configuration within the preset duration after the maximum operation information stops being updated, it can be determined that the current user operation for triggering three-dimensional operation pointer configuration logic fails, and the dynamically updated maximum operation information can be reset, so that the maximum operation information can be updated again next time.

Optionally, the obtained information of each operation includes operation displacement information. The operation displacement information may include a device height, a device movement distance, and a movement speed. The maximum operation information includes maximum operation displacement information. The maximum operation displacement information may include a maximum device height, a maximum device movement distance, and a maximum movement speed.

In some optional implementations of some embodiments, the execution body may determine, based on operation displacement information included in the information of the current operation and maximum operation displacement information included in the updated maximum operation information, whether the current operation satisfies the preset condition for configuring the three-dimensional operation pointer. In practice, the execution body may determine, according to the following steps, whether the current operation satisfies the preset condition for configuring the three-dimensional operation pointer.

First step: In response to determining that the maximum device height stops being updated, determine whether a movement speed included in the operation displacement information included in the information of the current operation satisfies a preset movement speed condition. The preset movement speed condition is that the movement speed is less than a preset movement speed. For example, the preset movement speed may be 1 centimeter per second. Herein, a specific setting of the preset movement speed is not limited.

Second step: In response to determining that the movement speed included in the operation displacement information included in the information of the current operation satisfies the preset movement speed condition, determine whether the maximum movement speed satisfies a preset speed condition. The preset speed condition may be that the maximum movement speed is greater than a preset movement speed. For example, the preset movement speed may be 15 centimeters per second. Herein, a specific setting of the preset movement speed is not limited.

Third step: In response to determining that the maximum movement speed satisfies the preset speed condition, determine whether a height difference between the maximum device height included in the maximum operation displacement information and a device height included in the operation displacement information included in the information of the current operation satisfies a preset distance difference condition. The preset distance difference condition may be that the height difference is greater than a preset height difference. For example, the preset height difference may be 30 centimeters. Herein, a specific setting of the preset height difference is not limited.

Fourth step: In response to determining that the height difference satisfies the preset distance difference condition, determine whether the current operation satisfies the preset condition for configuring the three-dimensional operation pointer. Thus, movement-related information in a process in which the user holds the operation auxiliary device can be used to determine whether the configuration logic of the three-dimensional operation pointer is triggered.

Optionally, the obtained information of each operation includes operation angle information and operation displacement information. The operation angle information may include an operation angle and an operation angular velocity. The operation displacement information may include a device height, a device movement distance, and a movement speed. The maximum operation information includes maximum operation angle information and maximum operation displacement information. The maximum operation angle information may include a maximum operation angle and a maximum operation angular velocity. The maximum operation displacement information may include a maximum device height, a maximum device movement distance, and a maximum movement speed.

In some optional implementations of some embodiments, the execution body may determine, based on operation angle information and operation displacement information included in the information of the current operation and maximum operation angle information and maximum operation displacement information included in the updated maximum operation information, whether the current operation satisfies the preset condition for configuring the three-dimensional operation pointer. In practice, the execution body may determine, according to the following steps, whether the current operation satisfies the preset condition for configuring the three-dimensional operation pointer.

First step: In response to determining that the maximum device height stops being updated, determine whether an operation angular velocity included in the operation angle information included in the information of the current operation satisfies a first preset angular velocity condition. The first preset angular velocity condition may be that the operation angular velocity is less than a first preset angular velocity. For example, the first preset angular velocity may be 1.5 radians per second. Herein, a specific setting of the first preset angular velocity is not limited.

Second step: In response to determining that the operation angular velocity included in the operation angle information included in the information of the current operation satisfies the first preset angular velocity condition, determine whether the maximum operation angular velocity satisfies a second preset angular velocity condition. The second preset angular velocity condition may be that the maximum operation angular velocity is greater than a second preset angular velocity. For example, the second preset angular velocity may be 15 radians per second. Herein, a specific setting of the second preset angular velocity is not limited.

Third step: In response to determining that the maximum operation angular velocity satisfies the second preset angular velocity condition, determine whether a height difference between the maximum device height and a device height included in the operation displacement information included in the information of the current operation satisfies a preset distance difference condition. The preset distance difference condition may be that the height difference is greater than a preset height difference. For example, the preset height difference may be 30 centimeters. Herein, a specific setting of the preset height difference is not limited.

Fourth step: In response to determining that the height difference satisfies the preset distance difference condition, determine whether the current operation satisfies the preset condition for configuring the three-dimensional operation pointer. Thus, movement-related information and rotation-related information in a process in which the user holds the operation auxiliary device can be used to determine whether the configuration logic of the three-dimensional operation pointer is triggered.

Step 104: In response to determining that the current operation satisfies the preset condition for configuring the three-dimensional operation pointer, configure a three-dimensional operation pointer based on a pointer status of the three-dimensional operation pointer used for display on the head-mounted display device.

In some embodiments, in response to determining that the current operation satisfies the preset condition for configuring the three-dimensional operation pointer, the execution body may configure the three-dimensional operation pointer based on a pointer status of the three-dimensional operation pointer used for display on the head-mounted display device. The pointer status may be used to represent a configuration status of the three-dimensional operation pointer. For example, the pointer status may be activated or non-activated. In practice, in response to determining that the pointer status indicates that the three-dimensional operation pointer is not activated, the execution body may display the three-dimensional operation pointer in three-dimensional display space of the head-mounted display device, to activate the three-dimensional operation pointer. The three-dimensional operation pointer may be a spatial element used to indicate a position of a user operation in the three-dimensional display space. For example, the three-dimensional operation pointer may be but is not limited to a ray or a cursor. When the three-dimensional operation pointer is a ray, a ray from the outside to the inside may be displayed in the three-dimensional display space. It should be noted that the three-dimensional operation pointer may be displayed in the form of 3dof or 6dof.

In some optional implementations of some embodiments, in response to determining that the pointer status indicates that the three-dimensional operation pointer is activated, the execution body may reset the three-dimensional operation pointer. Herein, a display direction of a reset three-dimensional operation pointer is a direction recalibrated using the information of the current operation of the operation auxiliary device. Thus, when the three-dimensional operation pointer is activated, the three-dimensional operation pointer can be directly reset, so that the three-dimensional operation pointer can be reset using the same operation.

In some optional implementations of some embodiments, in response to determining that the pointer status indicates that the three-dimensional operation pointer is not activated, the execution body may activate the three-dimensional operation pointer.

In some optional implementations of some embodiments, the execution body may activate the three-dimensional operation pointer according to the following steps.

First step: Determine a current direction vector of the operation auxiliary device in a device coordinate system. The device coordinate system may be a coordinate system with a reference point of the operation auxiliary device as an origin. For example, the reference point may be a center point. The direction vector can be used to represent an orientation of the operation auxiliary device. Specifically, the direction vector may be a vector from the origin of the device coordinate system to a center point of a top surface of the operation auxiliary device.

Second step: Map the direction vector to three-dimensional display space of the head-mounted display device, to obtain a mapped direction vector. The three-dimensional display space may be three-dimensional space for the user to view content displayed by the head-mounted display device. In practice, the execution body may map the direction vector to the three-dimensional display space of the head-mounted display device using rotation and translation transformation, to obtain the mapped direction vector.

Third step: Display the three-dimensional operation pointer in the three-dimensional display space based on a direction corresponding to the mapped direction vector, to activate the three-dimensional operation pointer. In practice, the execution body may display the three-dimensional operation pointer in the three-dimensional display space based on the direction corresponding to the mapped direction vector, to activate the three-dimensional operation pointer. Thus, the direction of the three-dimensional operation pointer can be reset while activating the three-dimensional operation pointer.

In some optional implementations of some embodiments, the execution body may reset the three-dimensional operation pointer according to the following steps.

First step: Determine a current direction vector of the operation auxiliary device in a device coordinate system.

Second step: Map the direction vector to three-dimensional display space of the head-mounted display device, to obtain a mapped direction vector.

Third step: Adjust a pointing direction of the displayed three-dimensional operation pointer to a direction corresponding to the mapped direction vector in the three-dimensional display space, to reset the three-dimensional operation pointer. Thus, when the three-dimensional operation pointer configuration logic is triggered in a case that the three-dimensional operation pointer is activated, the display direction of the displayed three-dimensional operation pointer can be calibrated, thereby eliminating a direction error accumulated by moving the three-dimensional operation pointer a plurality of times.

In some optional implementations of some embodiments, the execution body may configure the three-dimensional operation pointer according to the following steps.

First step: Determine whether there is a touch operation corresponding to the operation auxiliary device. The touch operation may be an operation of touching a touchscreen or a touchpad.

Second step: Configure the three-dimensional operation pointer in response to determining that there is no touch operation corresponding to the operation auxiliary device. Thus, after the configuration logic of the three-dimensional operation pointer is satisfied, when the user accidentally touches the operation auxiliary device, the configuration logic of the three-dimensional operation pointer may not be triggered, thereby preventing confusion in interaction logic caused by a mistouch of the user.

Optionally, the execution body may further perform the following steps.

First step: Obtain each piece of pitch and yaw angle information of the operation auxiliary device in a pitch and yaw operation process in response to detecting a pitch and yaw operation of the operation auxiliary device and the pointer status indicating that the three-dimensional operation pointer is activated. The pitch and yaw operation may be an operation that simultaneously includes pitching up and down and yawing left and right. For example, the pitch and yaw operation may be an operation of holding the operation auxiliary device and waving the operation auxiliary device toward the lower left. The pitch and yaw angle information may include but is not limited to a pitch angle, a yaw angle, a pitch angular velocity, and a yaw angular velocity. The pitch angle may be an attitude angle of rotating downward in three-dimensional space. The pitch angular velocity may be an angular velocity for the pitch angle. Thus, when the user performs a pitch and yaw operation on the operation auxiliary device in a state in which the three-dimensional operation pointer is activated, each piece of pitch and yaw angle information of the operation auxiliary device in the pitch and yaw process may start to be collected.

Second step: Update maximum pitch and yaw angle information based on each piece of obtained pitch and yaw angle information in the pitch and yaw operation process. The maximum pitch and yaw angle information may represent information about a maximum operation amount in the pitch and yaw process. The maximum pitch and yaw angle information includes a maximum pitch angle and a maximum yaw angle. In an initial state, the maximum pitch angle and the maximum yaw angle included in the maximum pitch and yaw angle information may be 0. In practice, the execution body may update the maximum pitch and yaw angle information in real time in the current operation process based on the pitch and yaw angle information collected in real time.

Third step: Generate a pitch and yaw angular velocity variance based on each piece of obtained pitch and yaw angle information in the pitch and yaw operation process in response to determining that the maximum pitch and yaw angle information stops being updated. In practice, the execution body may determine a variance of pitch angular velocities and yaw angular velocities included in the foregoing pitch and yaw angle information as the pitch and yaw angular velocity variance.

Fourth step: In response to determining that a maximum pitch angle and a maximum yaw angle included in updated maximum pitch and yaw angle information and the pitch and yaw angular velocity variance satisfy a preset pitch and yaw angle condition, determine a central direction vector based on the maximum pitch angle and the maximum yaw angle included in the updated maximum pitch and yaw angle information. The preset pitch and yaw angle condition may be that the maximum pitch angle is greater than or equal to a preset pitch angle, the maximum yaw angle is greater than or equal to a preset yaw angle, and the pitch and yaw angular velocity variance is less than or equal to a preset angular velocity variance. Herein, specific settings of the preset pitch angle, the preset yaw angle, and the preset angular velocity variance are not limited. In practice, the execution body may perform yaw adjustment on a direction vector corresponding to the maximum pitch angle in the device coordinate system based on the maximum yaw angle, to obtain an adjusted direction vector as the central direction vector. The central direction vector may be used as a central reference direction for the operation auxiliary device during subsequent movement. Thus, when the maximum pitch angle, the maximum yaw angle, and the pitch and yaw angular velocity variance in the pitch and yaw process of the operation auxiliary device all satisfy the conditions, the central reference direction for the operation auxiliary device during subsequent movement can be determined.

Fifth step: Determine a reference direction vector range based on the central direction vector. An included angle between a reference direction vector within the reference direction vector range and the central direction vector is less than or equal to a preset angle. Herein, the reference direction vector range can be represented by a preset angle, representing an included angle threshold with the central direction vector. Thus, the reference direction vector range can be used as a direction range for the operation auxiliary device during movement.

Sixth step: In response to detecting a movement operation on the operation auxiliary device within the reference direction vector range, perform the following hidden steps for each piece of movement information of the movement operation in a movement process.

First substep: Map the movement information to the three-dimensional display space of the head-mounted display device to obtain mapped movement information. The movement information may include a movement distance and a movement speed. The mapped movement information includes a mapped movement distance and a mapped movement speed. In practice, the execution body may map the movement information to the three-dimensional display space of the head-mounted display device using rotation and translation transformation, to obtain the mapped movement information.

Second substep: In response to determining that the mapped movement distance satisfies a preset distance condition, hide, based on the mapped movement distance and the mapped movement speed, the three-dimensional operation pointer by a target proportion from an end of the three-dimensional operation pointer displayed on the head-mounted display device. The target proportion corresponds to the mapped movement distance. The preset distance condition may be that the mapped movement distance is less than or equal to a preset mapped movement distance. The preset mapped movement distance may be a total movable distance that is set in advance. After movement by the preset mapped movement distance, the displayed three-dimensional operation pointer is completely hidden. The target proportion may be a proportion corresponding to a ratio of the mapped movement distance to the preset mapped movement distance. In practice, the execution body may hide the three-dimensional operation pointer by the target proportion based on the mapped movement speed. Thus, the three-dimensional operation pointer displayed by the head-mounted display device can be gradually hidden from the end of the three-dimensional operation pointer following the user's pitch and yaw operation on the handheld operation auxiliary device, until the three-dimensional operation pointer is completely hidden.

The first step to the sixth step, as an inventive point of embodiments of the present disclosure, resolves a technical problem that "when a three-dimensional operation ray is disabled, it is still necessary to touch a touch area, which also causes a problem that the user needs to lower the head to look at a touch device, interaction logic is mutually exclusive, and interaction is confusing". A factor causing the problem that the user needs to lower the head to look at the touch device, the interaction logic is mutually exclusive, and the user is prone to confusion is often as follows: When the three-dimensional operation ray is disabled, it is still necessary to touch the touch area, which also causes the problem that the user needs to lower the head to look at the touch device, the interaction logic is mutually exclusive, and the user is prone to confusion. If the foregoing factor is resolved, an effect of not requiring the user to lower the head to look at the touch device, avoiding mutual exclusion of interaction caused by a touch operation, and making it convenient for the user to remember an operation manner of configuring the three-dimensional operation pointer can be achieved. To achieve the effect, in the present disclosure, when the three-dimensional operation pointer is in an active state, if the user rotates the operation auxiliary device toward the lower left, the ray is dynamically hidden from an end of the ray based on a distance toward the lower left, until the ray is completely hidden. Thus, the three-dimensional operation pointer can be prevented from being disabled by a touch operation, thereby avoiding mutual exclusion of interaction caused by the touch operation, and making it convenient for the user to remember an operation manner of configuring the three-dimensional operation pointer.

The foregoing embodiments of the present disclosure have the following beneficial effects: The three-dimensional operation pointer configuration method according to some embodiments of the present disclosure simplifies user operations for configuring the three-dimensional operation pointer, and improves immersion of using the head-mounted display device by the user, and there is no need to move the line of sight away from the head-mounted display device, thereby reducing a mistouch rate, avoiding mutual exclusion of interaction caused by a touch operation, and making it convenient for the user to remember an operation manner of configuring the three-dimensional operation pointer. Specifically, reasons for cumbersome interaction operations, a high mistouch rate, mutual exclusion of interaction caused by a touch operation, and user confusion are as follows: When the user wears the head-mounted display device and performs the touch operation, the user needs to shift the line of sight to a particular area on a touch device, resulting in cumbersome interaction operations, and poor immersion of using the head-mounted display device by the user. In addition, the mistouch rate is high when the line of sight disengages from the head-mounted display device. When the particular area on the touch device corresponds to a touch operation with another function, touch operations corresponding to different functions may cause mutual exclusion. In addition, touch operations acting on the same area are similar, which easily makes the user get confused. Based on this, in the three-dimensional operation pointer configuration method according to some embodiments of the present disclosure, first, information of each operation of an operation auxiliary device in a current operation process is obtained, where the operation auxiliary device is in communication connection to a head-mounted display device, and a current operation corresponding to the current operation process satisfies a preset non-touch condition. Thus, information of each operation of the operation auxiliary device in a non-touch operation process of a user can be collected when the user holds the operation auxiliary device. Then, maximum operation information is updated based on the obtained information of each operation in the current operation process. Thus, the maximum operation information representing a maximum operation amount can be continuously updated based on the operation information in the operation process. Subsequently, in response to determining that the maximum operation information stops being updated, whether the current operation satisfies a preset condition for configuring the three-dimensional operation pointer is determined based on updated maximum operation information and information of the current operation of the operation auxiliary device. Thus, when the maximum operation information representing the maximum operation amount stops being updated, whether the current operation triggers configuration logic of a three-dimensional operation pointer can be determined based on the information of the current operation and the maximum operation information. Finally, in response to determining that the current operation satisfies the preset condition for configuring the three-dimensional operation pointer, a three-dimensional operation pointer is configured based on a pointer status of the three-dimensional operation pointer used for display on the head-mounted display device. Thus, after the current operation triggers the configuration logic of the three-dimensional operation pointer, the configuration logic of the three-dimensional operation pointer can be executed. Because configuration of the three-dimensional operation pointer is triggered by a non-touch operation of the user, the user does not need to perform a touch operation in any particular area on the operation auxiliary device, and therefore does not need to move the line of sight away from the head-mounted display device, thereby simplifying user operations for configuring the three-dimensional operation pointer, improving immersion of using the head-mounted display device by the user, and reducing a mistouch rate. In addition, mutual exclusion of interaction caused by a touch operation can be avoided, and the user does not need to remember a touch operation manner in the particular area, thereby making it convenient for the user to remember an operation manner of configuring the three-dimensional operation pointer.

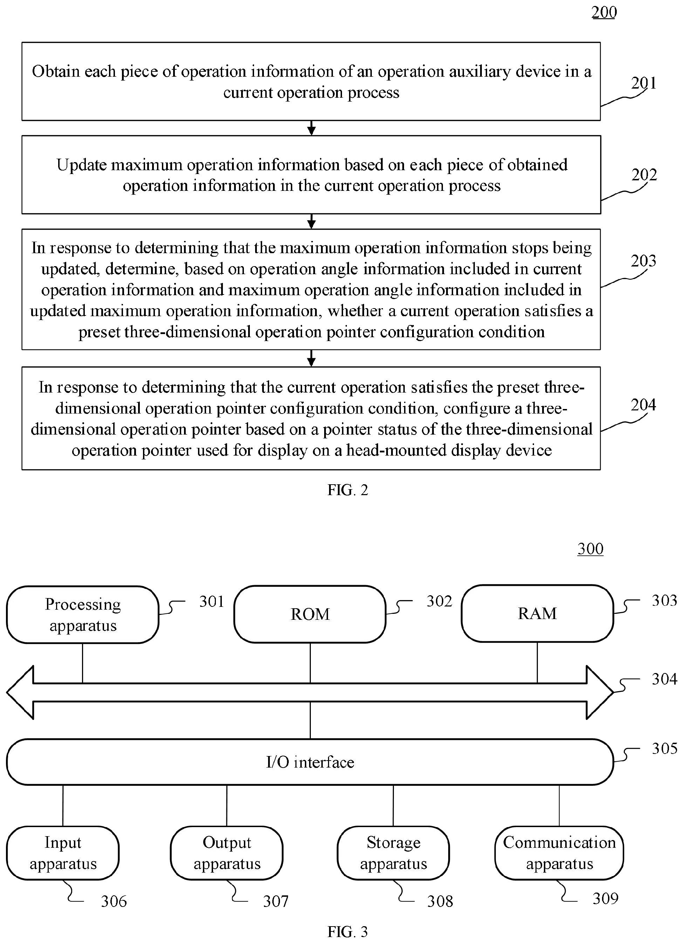

Further, FIG. 2 shows a process 200 of some other embodiments of a three-dimensional operation pointer configuration method. The process 200 of the three-dimensional operation pointer configuration method includes the following steps.

Step 201: Obtain information of each operation of an operation auxiliary device in a current operation process.

In some embodiments, an execution body (such as a head-mounted display device or the operation auxiliary device) of the three-dimensional operation pointer configuration method may obtain information of each operation of the operation auxiliary device in the current operation process. the obtained information of each operation includes operation angle information. The operation angle information may be information related to an angle during operation. The maximum operation information includes maximum operation angle information. The maximum operation angle information may be extremum information related to an angle during operation. The operation angle information may include an operation angle and an operation angular velocity. The maximum operation angle information may include a maximum operation angle and a maximum operation angular velocity.

When an operation corresponding to the current operation process is a pitch shake operation, the operation angle included in the operation angle information is a pitch angle. The operation angular velocity included in the operation angle information is a pitch angular velocity. The maximum operation angle included in the maximum operation angle information is a maximum pitch angle. The maximum operation angular velocity included in the maximum operation angle information is a maximum pitch angular velocity. The pitch angle may be an angle of an attitude in three-dimensional space monitored in a process of holding the operation auxiliary device and shaking the operation auxiliary device up and down. The pitch angular velocity may be an angular velocity for the pitch angle. Thus, configuration logic of a three-dimensional operation pointer can be triggered through an up-and-down shake operation.

When an operation corresponding to the current operation process is a lateral shake operation, the operation angle included in the operation angle information is a yaw angle. The operation angular velocity included in the operation angle information is a yaw angular velocity. The maximum operation angle included in the maximum operation angle information is a maximum yaw angle. The maximum operation angular velocity included in the maximum operation angle information is a maximum yaw angular velocity. The yaw angle may be an angle of an attitude in three-dimensional space monitored in a process of holding the operation auxiliary device and shaking the operation auxiliary device left and right. The yaw angular velocity may be an angular velocity for the yaw angle. Thus, configuration logic of a three-dimensional operation pointer can be triggered through a left-and-right shake operation.

When an operation corresponding to the current operation process is a roll operation, the operation angle included in the operation angle information is a roll angle. The operation angular velocity included in the operation angle information is a roll angular velocity. The maximum operation angle included in the maximum operation angle information is a maximum roll angle. The maximum operation angular velocity included in the maximum operation angle information is a maximum roll angular velocity. The roll angle may be an angle of an attitude in three-dimensional space monitored in a process of holding the operation auxiliary device and rolling the operation auxiliary device left and right. The roll angular velocity may be an angular velocity for the roll angle. Thus, configuration logic of a three-dimensional operation pointer can be triggered through a roll operation.

Step 202: Update maximum operation information based on the obtained information of each operation in the current operation process.

In some embodiments, for a specific implementation and technical effects of step 202, refer to step 102 in the embodiments corresponding to FIG. 1. Details are not described herein again.

Step 203: In response to determining that the maximum operation information stops being updated, determine, based on operation angle information included in the information of the current operation and maximum operation angle information included in updated maximum operation information, whether the current operation satisfies a preset condition for configuring the three-dimensional operation pointer.

In some embodiments, in response to determining that the maximum operation information stops being updated, the execution body may determine, based on the operation angle information included in the information of the current operation and the maximum operation angle information included in the updated maximum operation information, whether the current operation satisfies the preset condition for configuring the three-dimensional operation pointer.

In practice, the execution body may determine, according to the following steps, whether the current operation satisfies the preset condition for configuring the three-dimensional operation pointer.

First step: In response to determining that an operation angular velocity included in the information of the current operation satisfies a preset angular velocity threshold condition, determine whether a maximum operation angular velocity included in the updated maximum operation angle information satisfies a preset maximum angular velocity threshold condition. The preset angular velocity threshold condition may be that the operation angular velocity included in the information of the current operation is less than a first preset operation angular velocity. For example, the first preset operation angular velocity may be 1.5 radians per second. The preset maximum angular velocity threshold condition may be that the maximum operation angular velocity included in the updated maximum operation angle information is greater than a second preset operation angular velocity. For example, the second preset operation angular velocity may be 15 radians per second. Herein, specific settings of the first preset operation angular velocity and the second preset operation angular velocity are not limited.

Second step: In response to determining that the maximum operation angular velocity included in the updated maximum operation angle information satisfies the preset maximum angular velocity threshold condition, determine whether a maximum operation angle included in the updated maximum operation angle information and an operation angle included in the information of the current operation satisfy a preset angle difference condition. The preset angle difference condition may be that a difference between the maximum operation angle and the operation angle included in the information of the current operation is greater than a preset angle. For example, the preset angle may be 60°. Herein, a specific setting of the preset angle is not limited.

Third step: In response to determining that the maximum operation angle included in the updated maximum operation angle information and the operation angle included in the information of the current operation satisfy the preset angle difference condition, determine whether the current operation satisfies the preset condition for configuring the three-dimensional operation pointer. Thus, when the operation angle, the operation angular velocity, the maximum operation angle, and the maximum operation angular velocity of the current operation satisfy specific conditions, it is determined that the current operation triggers the configuration logic of the three-dimensional operation pointer.

It should be noted that when the current operation is an up-and-down shake operation, the operation angle is a pitch angle, and when the operation auxiliary device is lifted, the maximum operation angle information may be updated. When the maximum operation angle information stops being updated, it can be determined that the operation auxiliary device is in a falling state. Thus, by monitoring the pitch angle, the pitch angular velocity, the maximum pitch angle, and the maximum pitch angular velocity, whether the configuration logic of the three-dimensional operation pointer is triggered can be determined in a process of shaking the operation auxiliary device up and down. In addition, the user can configure the three-dimensional operation pointer through a simple up-and-down shake operation, which is easy to operate and convenient for the user to remember.

Step 204: In response to determining that the current operation satisfies the preset condition for configuring the three-dimensional operation pointer, configure a three-dimensional operation pointer based on a pointer status of the three-dimensional operation pointer used for display on the head-mounted display device.

In some embodiments, for a specific implementation and technical effects of step 204, refer to step 104 in the embodiments corresponding to FIG. 1. Details are not described herein again.

It can be learned from FIG. 2 that, compared with the description of some embodiments corresponding to FIG. 1, the process 200 of the three-dimensional operation pointer configuration method in some embodiments corresponding to FIG. 2 reflects the steps of determining, based on operation angle-related information, whether the configuration logic of the three-dimensional operation pointer is triggered. Thus, in the solution described in these embodiments, whether the configuration logic of the three-dimensional operation pointer is triggered can be determined in a process in which the user holds and rotates the operation auxiliary device, so that the configuration logic of the three-dimensional operation pointer can be triggered through a simple rotation operation, thereby simplifying user operations for configuring the three-dimensional operation pointer.

In the following, FIG. 3 is a schematic structural diagram of a head-mounted display device 300 applicable to implement some embodiments of the present disclosure. The head-mounted display device shown in FIG. 3 is merely an example and should not impose any limitation on a functional and a scope of use of the embodiments of the present disclosure.

As shown in FIG. 3, the head-mounted display device 300 may include a processing apparatus 301 (for example, a central processing unit or a graphics processing unit) that may perform various appropriate actions and processing based on a program stored in a read-only memory (ROM) 302 or a program loaded from a storage apparatus 308 into a random access memory (RAM) 303. The RAM 303 further stores various programs and data required by an operation of the head-mounted display device 300. The processing apparatus 301, the ROM 302, and the RAM 303 are connected to each other through a bus 304. An input/output (I/O) interface 305 is also connected to the bus 304.

Generally, the following apparatuses may be connected to the I/O interface 305: an input apparatus 306 including, for example, a touchscreen, a touchpad, a keyboard, a mouse, a camera, a microphone, an accelerometer, and a gyroscope; an output apparatus 307 including, for example, a liquid crystal display (LCD), a loudspeaker, and a vibrator; and a communication apparatus 309. The communication apparatus 309 may allow the head-mounted display device 300 to communicate with another device in a wireless or wired manner to exchange data. Although FIG. 3 shows the head-mounted display device 300 with various apparatuses, it should be understood that it is not required to implement or possess all the apparatuses shown. Alternatively, more or fewer apparatuses may be implemented or possessed. Each block shown in FIG. 3 may represent one apparatus, or may represent a plurality of apparatuses as required.

The head-mounted display device 300 may include at least one display screen and an optical element, used for imaging in front of eyes of a user. The optical element may include but is not limited to a prism, a free-form surface, a BirdBath, and an optical waveguide. The optical element may be configured to superimpose digital information displayed on the display screen onto a field of view of the user to improve visual experience.

The head-mounted display device 300 may be in communication connection to an operation auxiliary device. The operation auxiliary device includes an operation information collection apparatus. The operation information collection apparatus is configured to obtain operation information of the operation auxiliary device in an operation process. The operation information collection apparatus may include an inertial measurement unit and/or an infrared sensor. The operation auxiliary device may serve as an input apparatus of the head-mounted display device.

In particular, according to some embodiments of the present disclosure, the process described above with reference to the flowchart may be implemented as a computer software program. For example, some embodiments of the present disclosure include a computer program product that includes a computer program carried on a computer-readable medium, and the computer program includes program code used to perform the method shown in the flowchart. In some such embodiments, the computer program may be downloaded from a network by using the communication apparatus 309 and installed, or installed from the storage apparatus 308, or installed from the ROM 302. When the computer program is executed by the processing apparatus 301, the foregoing functions defined in the method in some embodiments of the present disclosure are performed.

It should be noted that the computer-readable medium described in some embodiments of the present disclosure may be a computer-readable signal medium, a computer-readable storage medium, or any combination of the two. For example, the computer-readable storage medium may be but is not limited to an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. More specific examples of the computer-readable storage medium may include but are not limited to the following: an electric connection with one or more wires, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage component, a magnetic storage component, or any proper combination thereof. In some embodiments of the present disclosure, the computer-readable storage medium may be any tangible medium that includes or stores a program, and the program may be used by or in combination with an instruction execution system, apparatus, or component. In some embodiments of the present disclosure, the computer-readable signal medium may include a data signal propagated in a baseband or as a part of a carrier, and carries computer-readable program code. The data signal propagated in such a way can be in a plurality of forms, and includes but is not limited to an electromagnetic signal, an optical signal, or any proper combination thereof. The computer-readable signal medium may be alternatively any computer-readable medium other than the computer-readable storage medium, and the computer-readable signal medium may send, propagate, or transmit a program that is used by or in combination with an instruction execution system, apparatus, or component. The program code included in the computer-readable medium may be transmitted by using any proper medium, including but not limited to: a wire, an optical cable, an RF (radio frequency), or any proper combination of the foregoing mediums.

In some implementations, a client and a server may communicate with each other by using any currently known or future developed network protocol, such as an HTTP (HyperText Transfer Protocol, hypertext transfer protocol), and may be interconnected with any form or medium of digital data communication (for example, a communication network). Examples of the communication network include a local area network ("LAN"), a wide area network ("WAN"), an internet work (for example, the Internet), an end-to-end network (for example, an ad hoc end-to-end network), and any currently known or future developed network.

The foregoing computer-readable medium may be included in the head-mounted display device, or may exist separately and is not assembled into the head-mounted display device. The foregoing computer-readable medium carries one or more programs, and when the one or more programs are executed by the head-mounted display device, the head-mounted display device is enabled to: obtain information of each operation of an operation auxiliary device in a current operation process, where the operation auxiliary device is in communication connection to the head-mounted display device, and a current operation corresponding to the current operation process satisfies a preset non-touch condition; update maximum operation information based on the obtained information of each operation in the current operation process; in response to determining that the maximum operation information stops being updated, determine, based on updated maximum operation information and information of the current operation of the operation auxiliary device, whether the current operation satisfies a preset condition for configuring the three-dimensional operation pointer; and in response to determining that the current operation satisfies the preset condition for configuring the three-dimensional operation pointer, configure a three-dimensional operation pointer based on a pointer status of the three-dimensional operation pointer used for display on the head-mounted display device.

Computer program code for performing operations in some embodiments of the present disclosure may be written in one or more programming languages or a combination thereof, such as Java, Smalltalk, and C++, which further include conventional procedural programming languages such as the "C" language or similar programming languages. The program code may be completely executed on a user computer, partially executed on a user computer, executed as an independent software package, partially executed on a user computer and partially executed on a remote computer, or completely executed on a remote computer or a server. In a case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and the block diagrams in the accompanying drawings illustrate possible system architectures, functions, and operations of the system, the method, and the computer program product according to various embodiments of the present disclosure. In this regard, each block in the flowchart or the block diagram may represent a module, a program segment, or a part of code. The module, the program segment, or the part of the code includes one or more executable instructions used for implementing designated logic functions. It should also be noted that, in some implementations used as substitutes, functions annotated in blocks may alternatively occur in a sequence different from that annotated in the accompanying drawings. For example, two successively represented blocks may actually be performed basically in parallel, and sometimes the two blocks may be performed in a reverse sequence. This is determined by a related function. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The foregoing described functions in this specification may be performed at least in part by one or more hardware logic components. For example, without limitation, exemplary types of hardware logic components that may be used include: a field programmable gate array (FPGA), an application-specific integrated circuit (ASIC), an application specific standard part (ASSP), a system on chip (SOC), a complex programmable logic device (CPLD), and the like.

Some embodiments of the present disclosure further provide a computer program product, including a computer program. The computer program, when executed by a processor, implements any one of the foregoing three-dimensional operation pointer configuration methods.

The foregoing descriptions are merely some preferred embodiments of the present disclosure and descriptions of applied technical principles. A person skilled in the art should understand that the scope of the present invention in the embodiments of the present disclosure is not limited to a technical solution formed by a specific combination of the foregoing technical features, but also covers another technical solution formed by any combination of the foregoing technical features or equivalent features without departing from the foregoing inventive concept, for example, a technical solution formed by replacing the foregoing feature with a technical feature disclosed (but not limited to) in the embodiments of the present disclosure and having a similar function.

## Claims

1. A three-dimensional operation pointer configuration method, comprising:
obtaining information of each operation of an operation auxiliary device in a current operation process, wherein the operation auxiliary device is in communication connection to a head-mounted display device, and a current operation corresponding to the current operation process satisfies a preset non-touch condition;
updating maximum operation information based on the obtained information of each operation in the current operation process;
in response to that the maximum operation information stops being updated, determining whether a current operation satisfies a preset condition for configuring a three-dimensional operation pointer, based on updated maximum operation information and information of the current operation of the operation auxiliary device; and
in response to determining that the current operation satisfies the preset condition for configuring a three-dimensional operation pointer, configuring a three-dimensional operation pointer to be displayed on the head-mounted display device, based on a pointer status of the three-dimensional operation pointer .

2. The three-dimensional operation pointer configuration method according to claim 1, wherein the obtained information of each operation comprises operation angle information, the maximum operation information comprises maximum operation angle information, and the step of determining whether the current operation satisfies the preset condition for configuring a three-dimensional operation pointer based on updated maximum operation information and information of the current operation of the operation auxiliary device comprises:
determining, based on operation angle information comprised in information of the current operation and maximum operation angle information comprised in the updated maximum operation information, whether the current operation satisfies the preset condition for configuring the three-dimensional operation pointer.

3. The three-dimensional operation pointer configuration method according to claim 1, wherein the obtained information of each operation comprises operation displacement information, the maximum operation information comprises maximum operation displacement information, and the step of determining whether the current operation satisfies the preset condition for configuring a three-dimensional operation pointer based on updated maximum operation information and information of the current operation of the operation auxiliary device, whether the current operation satisfies a preset condition for configuring the three-dimensional operation pointer comprises:
determining, based on operation displacement information comprised in the information of the current operation and maximum operation displacement information comprised in the updated maximum operation information, whether the current operation satisfies the preset condition for configuring the three-dimensional operation pointer.

4. The three-dimensional operation pointer configuration method according to claim 1, wherein the obtained information of each operation comprises operation angle information and operation displacement information, the maximum operation information comprises maximum operation angle information and maximum operation displacement information, and the determining, based on updated maximum operation information and information of the current operation of the operation auxiliary device, whether the current operation satisfies a preset condition for configuring the three-dimensional operation pointer comprises:
determining, based on operation angle information and operation displacement information comprised in the information of the current operation and maximum operation angle information and maximum operation displacement information comprised in the updated maximum operation information, whether the current operation satisfies the preset condition for configuring the three-dimensional operation pointer.

5. The three-dimensional operation pointer configuration method according to claim 2, wherein the operation angle information comprises an operation angle and an operation angular velocity, the maximum operation angle information comprises a maximum operation angle and a maximum operation angular velocity, and the determining, based on operation angle information comprised in the information of the current operation and maximum operation angle information comprised in the updated maximum operation information, whether the current operation satisfies the preset condition for configuring the three-dimensional operation pointer comprises:
in response to determining that an operation angular velocity comprised in the information of the current operation satisfies a preset angular velocity threshold condition, determining whether a maximum operation angular velocity comprised in the updated maximum operation angle information satisfies a preset maximum angular velocity threshold condition;
in response to determining that the maximum operation angular velocity comprised in the updated maximum operation angle information satisfies the preset maximum angular velocity threshold condition, determining whether a maximum operation angle comprised in the updated maximum operation angle information and an operation angle comprised in the information of the current operation satisfy a preset angle difference condition; and
in response to determining that the maximum operation angle comprised in the updated maximum operation angle information and the operation angle comprised in the information of the current operation satisfy the preset angle difference condition, determining whether the current operation satisfies the preset condition for configuring the three-dimensional operation pointer.

6. The three-dimensional operation pointer configuration method according to claim 5, wherein when the operation corresponding to the current operation process is a pitch shake operation, the operation angle comprised in the operation angle information is a pitch angle, the operation angular velocity comprised in the operation angle information is a pitch angular velocity, the maximum operation angle comprised in the maximum operation angle information is a maximum pitch angle, and the maximum operation angular velocity comprised in the maximum operation angle information is a maximum pitch angular velocity.

7. The three-dimensional operation pointer configuration method according to claim 5, wherein when the operation corresponding to the current operation process is a lateral shake operation, the operation angle comprised in the operation angle information is a yaw angle, the operation angular velocity comprised in the operation angle information is a yaw angular velocity, the maximum operation angle comprised in the maximum operation angle information is a maximum yaw angle, and the maximum operation angular velocity comprised in the maximum operation angle information is a maximum yaw angular velocity.

8. The three-dimensional operation pointer configuration method according to claim 5, wherein when the operation corresponding to the current operation process is a roll operation, the operation angle comprised in the operation angle information is a roll angle, the operation angular velocity comprised in the operation angle information is a roll angular velocity, the maximum operation angle comprised in the maximum operation angle information is a maximum roll angle, and the maximum operation angular velocity comprised in the maximum operation angle information is a maximum roll angular velocity.

9. The three-dimensional operation pointer configuration method according to one of claims 1 to 8, wherein the step of configuring a three-dimensional operation pointer to be displayed on the head-mounted display device based on a pointer status of the three-dimensional operation pointer comprises:
resetting the three-dimensional operation pointer in response to that the pointer status indicates that the three-dimensional operation pointer is activated.

10. The three-dimensional operation pointer configuration method according to one of claims 1 to 8, wherein the step of configuring a three-dimensional operation pointer to be displayed on the head-mounted display device based on a pointer status of the three-dimensional operation pointer comprises:
activating the three-dimensional operation pointer in response to that the pointer status indicates that the three-dimensional operation pointer is not activated.

11. The three-dimensional operation pointer configuration method according to claim 10, wherein the step of activating the three-dimensional operation pointer comprises:
determining a current direction vector of the operation auxiliary device in a device coordinate system;
mapping the direction vector to three-dimensional display space of the head-mounted display device to obtain a mapped direction vector; and
displaying the three-dimensional operation pointer in the three-dimensional display space based on a direction corresponding to the mapped direction vector, so as to activate the three-dimensional operation pointer.

12. The three-dimensional operation pointer configuration method according to claim 9, wherein the step of resetting the three-dimensional operation pointer comprises:
determining a current direction vector of the operation auxiliary device in a device coordinate system;
mapping the direction vector to three-dimensional display space of the head-mounted display device to obtain a mapped direction vector; and
adjusting a pointing direction of the displayed three-dimensional operation pointer to a direction corresponding to the mapped direction vector in the three-dimensional display space, so as to reset the three-dimensional operation pointer.

13. The three-dimensional operation pointer configuration method according to one of claims 1 to 8, wherein the step of obtaining information of each operation of an operation auxiliary device in a current operation process comprises:
obtaining information of each operation of the operation auxiliary device in the current operation process in response to detecting an operation of enabling collection of operation information.

14. The three-dimensional operation pointer configuration method according to one of claims 1 to 8, wherein the step of configuring a three-dimensional operation pointer comprises:
determining whether there is a touch operation corresponding to the operation auxiliary device; and
configuring the three-dimensional operation pointer in response to determining that there is no touch operation corresponding to the operation auxiliary device.

15. The three-dimensional operation pointer configuration method according to one of claims 1 to 8, wherein the step of determining, based on updated maximum operation information and information of the current operation of the operation auxiliary device, whether the current operation satisfies a preset condition for configuring the three-dimensional operation pointer comprises:
in response to that the maximum operation information stops being updated, determining whether the current operation satisfies the preset condition for configuring the three-dimensional operation pointer within a time period corresponding to a preset duration; and
resetting the maximum operation information in response to determining that the current operation does not satisfy the preset condition for configuring the three-dimensional operation pointer within the time period corresponding to the preset duration.

16. A head-mounted display device, comprising:
one or more processors;
a storage apparatus, storing one or more programs;
at least one display screen and an optical element, used for imaging in front of eyes of a user; and
an operation auxiliary device, the operation auxiliary device comprising an operation information collection apparatus, and the operation information collection apparatus being configured to obtain operation information of the operation auxiliary device in an operation process; and
when executed by the one or more processors, the one or more programs causing the one or more processors to implement the three-dimensional operation pointer configuration method according to any one of claims 1 to 15.

17. The head-mounted display device according to claim 16, wherein the operation information collection apparatus comprises an inertial measurement unit and/or an infrared sensor.

18. A computer-readable medium, storing a computer program, wherein when executed by a processor, the computer program implements the three-dimensional operation pointer configuration method according to any one of claims 1 to 15.
